# EUROPÄISCHE PATENTSCHRIFT

(11) **EP 3 349 938 B1**
(45) Veröffentlichungstag und Bekanntmachung des Hinweises auf die Patenterteilung: **25.11.2020**
(21) Anmeldenummer: 16766310.3
(22) Anmeldetag: 16.09.2016
(51) Int. Cl.: B23K 26/044, B23K 26/04, B23K 26/28, B23K 26/26

(54) **VERFAHREN ZUM FÜHREN EINES BEARBEITUNGSKOPFES ENTLANG EINER ZU BEARBEITENDEN SPUR**
METHOD FOR GUIDING A MACHINING HEAD ALONG A TRACK TO BE MACHINED
PROCÉDÉ DE GUIDAGE D'UNE TÊTE D'USINAGE LE LONG D'UNE TRACE À USINER

(30) Priorität: 18.09.2015 DE 102015115803
(43) Veröffentlichungstag der Anmeldung: 25.07.2018
(73) Patentinhaber: Precitec GmbH & Co. KG, 76571 Gaggenau-Bad Rotenfels (DE)
(72) Erfinder: AGRAWAL, Fabian, 76593 Gernsbach (DE); BIRMANNS, Stefan, 8462 Rheinau (CH); SCHWARZ, Joachim, 8451 Kleinandelfingen (CH); SUPERNOK, Eric, 67483 Edesheim (DE)
(74) Vertreter: Ter Meer Steinmeister & Partner
(86) Internationale Anmeldenummer: PCT/EP2016/071938
(87) Internationale Veröffentlichungsnummer: WO 2017/046306

(56) Entgegenhaltungen:
- DE-A1-102010 011 253
- DE-T2- 60 119 072
- JP-B2- 3 004 279
- US-A- 5 001 324

## Beschreibung

Die Erfindung betrifft ein Verfahren zum Führen eines Bearbeitungskopfes, insbesondere eines Laser-Bearbeitungskopfes entlang einer zu bearbeitenden Spur, insbesondere entlang eines Stoßes oder einer Stoßfuge zwischen zwei miteinander zu verschweißenden Fügepartnern.

Beim Schweißen mit Laserstrahlung muss der Laserstrahl mit seinem den Bearbeitungspunkt bildenden Fokus den Stoß oder die Stoßfuge der zu schweißenden Fügepartnern exakt treffen. Dazu werden Nahtverfolgungssysteme eingesetzt, die mit Hilfe von Triangulationssensoren die tatsächliche Lage der Naht oder Stoßfuge, also der zu bearbeitenden Spur erfassen. Bei diesen Systemen werden der Abstand einer vor dem Auftreffpunkt des Laserstrahls auf das Werkstück projizierten Lichtlinie vom Auftreffpunkt des Laserstrahls zu sowie die Vorschubgeschwindigkeit des Laserauftreffpunktes, also des Bearbeitungspunktes als Parameter vorgegeben.

Nachteilig bei dieser Vorgehensweise ist, dass gerade bei kinematischen Systemen, bei denen sich die Vorschubgeschwindigkeit während des Schweißvorgangs ändert, was insbesondere bei Roboter geführten Laserbearbeitungsköpfen der Fall ist, die Ist-Lage von der Soll-Lage des Laserauftreffpunktes abweicht. Grund dafür ist, dass der aus der Vorschubgeschwindigkeit und dem Abstand berechnete Zeitpunkt für die Nachführung des Laserauftreffpunktes, also des vom Laserstrahl erzeugten Bearbeitungspunktes bei veränderter Vorschubgeschwindigkeit falsch berechnet wird. Die Genauigkeit, mit der der Laserstrahl die zu bearbeitende Spur, also den Stoß oder die Stoßfuge trifft, ist gerade bei kleinen Durchmessern im Laserstrahlfokus eine relevante Größe für den Anbindequerschnitt und somit für die Qualität der Schweißverbindung. Je kleiner der Laserstrahldurchmesser ist, desto genauer muss der Laserstrahl den Stoß treffen.

Ferner können Fehler dadurch entstehen, dass sich der Abstand von der Werkstückoberfläche zur Fokuslage verändert. Dadurch verändert sich auch der Abstand einer auf das Werkstück projizierten Lichtlinie vom Auftreffpunkt des Lasers auf der Werkstückoberfläche. Um in diesem Fehlerfall den Fokus des Laserstrahls wieder auf die Werkstückoberfläche zu verschieben, kann der Abstand einer Strahlformungsoptik zur Werkstückoberfläche korrigiert werden. Dazu kann zum Beispiel die Strahlformungsoptik im Laserbearbeitungskopf verstellt werden. Es ist jedoch grundsätzlich auch möglich, den Laserbearbeitungskopf senkrecht zur Werkstückoberfläche zu verstellen.

Aus der DE 10 2010 060 162 B3 ist ein Verfahren zur Erhöhung der Genauigkeit der Führung des Bearbeitungslasers von Fügevorrichtungen nach dem Lichtschnitt- oder Triangulationsverfahren bekannt, bei dem der Abstand einer Messlichtlinie im Vorlauf eines Auftreffpunktes eines Bearbeitungslasers vom Auftreffpunkt in Nahtlängsrichtung variiert wird, um aus den dabei gewonnenen Bilddaten mit Hilfe des Lichtschnittverfahrens die Topologie des Werkstücks zu ermitteln. Aufgrund der Kenntnis der Topologie des Werkstücks ist es möglich, einen durch eine Höhenänderung verursachten Fehler des Abstands zwischen Messlichtlinie und Laserbearbeitungspunkt zu kompensieren.

Aus der DE 10 2006 004 919 A1 ist ein weiteres Verfahren zum Führen eines Laserbearbeitungskopfes entlang einer zu schweißenden Naht mittels eines Lichtschnittverfahrens bekannt, bei dem vorlaufend in Schweißrichtung eine Laserlinie auf die zu schweißende Naht projiziert und von einer Bildverarbeitungseinheit gemessen wird. Aus dem Bild der Laserlinie wird das Profil der zu schweißenden Naht und damit deren Ist-Lage bestimmt. Aus der gemessenen Abweichung der aktuellen Position der zu schweißenden Naht von einer Soll-Position wird ein Korrektursignal ermittelt, das unmittelbar ohne Berücksichtigung des Abstandes der Messposition von der Schweißposition, also zum Bearbeitungspunkt verwendet wird, um den die Schweißposition festlegenden Laserfokus entlang der zu schweißenden Naht zu führen.

Aus der DE 10 2006 030 130 B3 ist ein adaptiver Laserbearbeitungskopf bekannt, der mit einem oder mehreren optischen Sensoren zur Messung des Abstandes des Laserbearbeitungskopfes vom Werkstück und zur Messung des Geschwindigkeitsvektors des Laserbearbeitungspunktes in der Ebene senkrecht zur Abstandsrichtung, also in der der Oberfläche des Werkstücks entsprechenden Ebene versehen ist. Aufgrund der verwendeten optischen Sensoren und der Verarbeitung der ermittelten Messdaten ist es möglich, den Laserbearbeitungspunkt entlang einer zu bearbeitenden Spur zu führen. Dabei kann auf die Vorschubgeschwindigkeit des Laserbearbeitungspunktes in Abhängigkeit vom Abstand des Arbeitspunktes zur Werkstückoberfläche und/oder von der Einstrahlrichtung des Laserstrahls geregelt werden.

Aus der DE 10 2009 057 209 ist ein weiterer Laserbearbeitungskopf bekannt, der mit einer Scanner-Optik für den Arbeitslaserstrahl ausgerüstet ist, mit deren Hilfe zusätzlich zur Nahführung die Bearbeitungsgeschwindigkeit, also die Geschwindigkeit mit der der Laserbearbeitungspunkt relativ zum Werkstück bewegt wird, relativ zur Führungsgeschwindigkeit, also relativ zur Geschwindigkeit des Laserbearbeitungskopfes, verringert oder erhöht werden kann. Die Nahtverfolgung selbst, also die Führung des Laserbearbeitungspunktes entlang der zu bearbeitenden Naht oder Spur, erfolgt wiederum nach dem Lichtschnittprinzip mittels Triangulation.

Aus der DE 10 2010 011 253 A1 ist ein weiteres Verfahren zum Führen eines Laserbearbeitungskopfes entlang einer zu bearbeitenden Spur bekannt, bei dem die Lage einer zu fügenden Naht oder Spur nach dem Lichtschnittprinzip mithilfe einer vor dem Bearbeitungspunkt auf die Bearbeitungslinie projizierten Lichtlinie erfasst wird. Da für einen optimalen Fügeprozess der Bearbeitungspunkt, also der Fokus des Arbeitslaserstrahls immer in einer vorbestimmten Höhe entlang der zu fügenden Naht verlaufen soll, wird auch der Abstand der Lichtlinie zum Auftreffpunkt des Laserstrahls ausgewertet. In Abhängigkeit von dem erfassten Abstand wird der Laserbearbeitungskopf senkrecht zur Oberfläche eines zu bearbeitenden Werkstücks auf und ab bewegt, um den Abstand der Lichtlinie vom Bearbeitungspunkt konstant zu halten, wodurch auch der Abstand zwischen Laserbearbeitungskopf und Werkstück und damit die Lage des Fokus des Arbeitslaserstrahls relativ zum Werkstück konstant gehalten wird.

Die DE 601 19 072 T2 beschreibt ein Verfahren zum Führen eines Laserbearbeitungskopfes (Laserstrahl-Projektionseinrichtung) entlang einer zu bearbeitenden Spur, bei dem eine Schweißabschnitt-Erfassungseinrichtung sequentiell einzelne Daten betreffend Schweißpositionen erfasst. Diese Daten werden in Kombination mit Zeiten, bei denen die einzelnen Daten betreffend die Schweißpositionen erhalten werden, sowie mit Bewegungsgeschwindigkeiten sequentiell in einem Speicher gespeichert, mit denen die Schweißabschnitt-Erfassungseinrichtung bewegt wird. Basierend auf den Zeiten und den Bewegungsgeschwindigkeiten, die im Speicher gespeichert sind, wird eine Zeit berechnet, bei der die Schweißabschnitt-Erfassungseinrichtung einen Punkt passiert hat, an dem die Laserstrahl-Projektionseinrichtung gerade angekommen ist. Ein Laserstrahl wird dann von der Laserstrahl-Projektionseinrichtung auf den Schweißabschnitt projiziert, der zu der berechneten Zeit durch die Scweascntt-Erassungsenrctung erfasst wurde. Der Oberbegriff von Anspruch 1 basiert auf der DE 601 19 072 T2.

In der US 5,001,324 A wird beschrieben, dass der Nachführ-Algorithmus aus dem Abstand zwischen Nahterfassungslichtstrahl und Schweißstrahl und der Schweißgeschwindigkeit den Zeitpunkt berechnet, wann jede der berechneten Nahtliniendaten zur Positionierung des Schweißstrahls benutzt werden müssen, um eine zuverlässige Nahtführung zu erreichen. Die Schweißgeschwindigkeit in Echtzeit zu erfassen wird nicht beschrieben.

Die JP H02-042 586 A betrifft ein Bildverarbeitungssystem für eine optische Nahtverfolgungsvorrichtung, die keinen Hinweis darauf gibt, die Bearbeitungsgeschwindigkeit bei der Nahtführung zu berücksichtigen.

Davon ausgehend liegt der Erfindung die Aufgabe zugrunde, ein weiteres Verfahren zum Führen eines Bearbeitungskopfes, insbesondere eines Laserbearbeitungskopfes, entlang einer zu bearbeitenden Spur bereit zu stellen, mit dem der Bearbeitungspunkt, also insbesondere der Fokus eines Bearbeitungslaserstrahls präzise entlang der zu bearbeitenden Spur, also entlang einer zu fügenden Naht oder Fuge geführt wird.

Diese Aufgabe wird durch das Verfahren nach Anspruch 1 gelöst. Vorteilhafte Ausgestaltungen und Weiterbildungen der Erfindung sind in den Unteransprüchen beschrieben.

Erfindungsgemäß wird der Bearbeitungspunkt nicht standardmäßig nach einer vorgegebenen Verzögerungszeit nach der Erfassung der Lage einer Spur auf diese eingestellt, sondern die Verzögerungszeit wird jeweils während der Bearbeitung individuell für jeden Bearbeitungspunkt oder für eine aufeinander folgende Gruppe von Bearbeitungspunkten aus der jeweiligen Ist-Bearbeitungsgeschwindigkeit und dem jeweiligen tatsächlichen Abstand einer Lichtschnittlinie vom Bearbeitungsmittelpunkt (TCP, Tool Center Point) ermittelt. Hierdurch wird erreicht, dass die Verstellung des Bearbeitungspunktes stets genau zu dem Zeitpunkt erfolgt, zu dem sich der Bearbeitungspunkt an der Stelle der Spur befindet, auf deren Lage der Bearbeitungspunkt eingestellt werden soll. Hierdurch lassen sich Einstellungsungenauigkeiten, die die Bearbeitungsqualität erheblich beeinträchtigen könnten, nahezu vollständig ausschließen.

Obwohl es grundsätzlich möglich ist, die aktuelle Bearbeitungsgeschwindigkeit, also die Ist-Bearbeitungsgeschwindigkeit mittels geeigneter Verfahren zu messen, ist erfindungsgemäß vorgesehen, dass die aktuelle Bearbeitungsgeschwindigkeit aus einer die Bewegung des Bearbeitungskopfes steuernden Steuerungseinheit ausgelesen und als aktueller Parameter für die Berechnung des Zeitpunkts für die Nachführung des Bearbeitungspunktes genutzt wird.

Bei einer vorteilhaften Ausgestaltung der Erfindung ist ferner vorgesehen, dass der Ist-Abstand zwischen der Lichtlinie auf dem Werkstück und dem Bearbeitungspunkt in Bearbeitungsrichtung erfasst und als aktueller Parameter für die Berechnung des Zeitpunkts für die Nachführung des Bearbeitungspunktes genutzt wird. Hierdurch wird die Präzision der Nachtführung des Bearbeitungspunktes weiter verbessert.

Da es bei der Bearbeitung eines Werkstücks mittels Laserstrahlung, insbesondere beim Schweißen, erforderlich ist, den Fokus eines Bearbeitungslaserstrahls immer im gleichen Abstand von einer Werkstückoberfläche zu halten, ist es bei einer vorteilhaften Ausgestaltung der Erfindung vorgesehen, dass der erfasste Ist-Abstand zwischen Lichtlinie und Bearbeitungspunkt als Parameter einer Regelung des Abstandes des Fokus eines Bearbeitungslaserstrahls von einer Werkstückoberfläche genutzt wird.

Die Regelung des Abstandes des Fokus des Bearbeitungslaserstrahls kann dabei entweder durch Verschiebung des gesamten Laserbearbeitungskopfes oder durch Verschiebung einer Strahlformungsoptik innerhalb des Laserbearbeitungskopfes erfolgen.

Die Erfindung wird im Folgenden beispielsweise anhand der Zeichnung näher erläutert. Es zeigen:
Figur 1 ein vereinfachtes schematisches Blockdiagramm eines Bearbeitungskopfes, insbesondere Laserbearbeitungskopfes mit Nahtverfolgungssystem,
Figur 2 (a) eine schematische Darstellung eines Kamerabildes einer Werkstückoberfläche im Bereich eines Laserauftreffpunktes und einer Lichtschnittlinie, und
Figur 2 (b) eine schematische vereinfachte Schnittdarstellung eines Werkstücks quer zur Bearbeitungsspur mit Bearbeitungslaserstrahl und Lichtfächer zur Erzeugung der Lichtschnittlinie.

In den verschiedenen Figuren der Zeichnung sind einander entsprechende Elemente mit gleichen Bezugszeichen versehen.

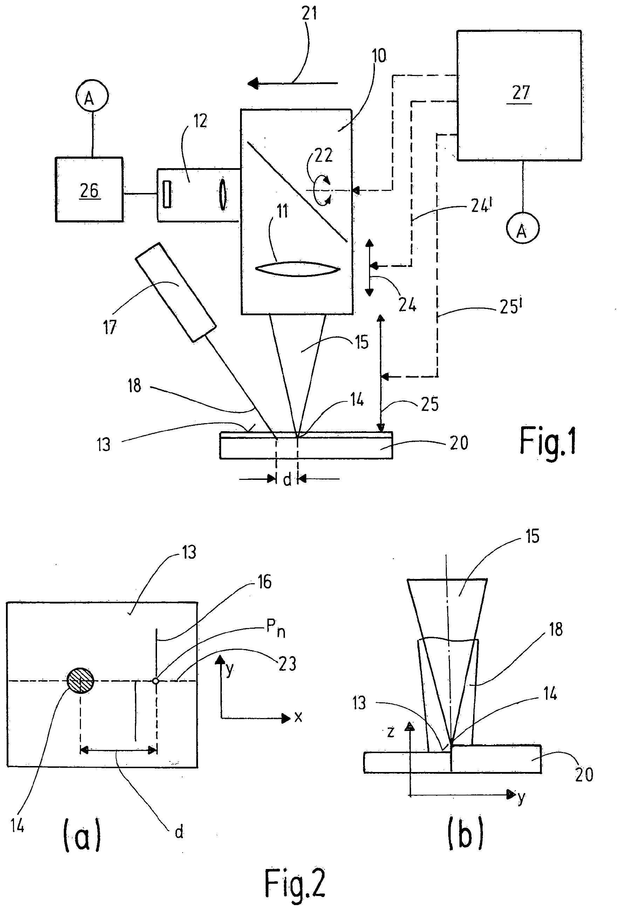

Figur 1 zeigt stark vereinfacht einen Bearbeitungskopf, insbesondere Laserbearbeitungskopf 10 mit einer Strahlformungsoptik 11 und einer Kamera 12 zur Beobachtung einer Werkstückoberfläche 13 im Bereich eines Auftreffpunktes 14 eines Bearbeitungslaserstrahls 15, im Folgenden auch einfach Laserstrahl 15 genannt, und einer Lichtlinie 16, die von einem Lichtschnittprojektor 17 mittels eines Lichtfächers 18 auf die Oberfläche 19 eines Werkstücks 20 projiziert wird.

Der Laserbearbeitungskopf 10 wird von einer nicht näher dargestellten Maschinensteuerung in Vorschubrichtung 21 mit einer dem Bearbeitungsprozess entsprechenden Geschwindigkeit geführt. Wie durch den Doppelpfeil 22 angedeutet, kann der Laserbearbeitungskopf 10 verschwenkt oder auch seitlich verschoben werden, um den Auftreffpunkt 14 des Laserstrahls 15 genau auf der zu bearbeiteten Spur 23, also auf der Stoßfuge zwischen zwei Werkstückteilen zu halten. Ferner dient die Maschinensteuerung zur Verstellen der Strahlformungsoptik 11, insbesondere der Fokussieroptik innerhalb des Laserbearbeitungskopfes 10, wie durch den Doppelpfeil 24 angedeutet ist. Ferner kann auch der gesamte Laserbearbeitungskopf 10 gemäß dem Doppelpfeil 25 senkrecht zur Werkstückoberfläche 19 verstellt werden, um die Höhenlage des Laserfokus relativ zum Werkstück 20 einzustellen.

Aus den von der Kamera 12 erfassten Bilddaten, ermittelt eine Bildverarbeitungseinheit 26 einen Abstand d zwischen der Lichtlinie 16 und dem Auftreffpunkt 14 des Laserstrahls 15 sowie die Lage des Schnittpunktes Pn zwischen Lichtlinie 16 und Stoßfuge oder Spur 23 in y-Richtung, also in Richtung quer zur Vorschubrichtung des Laserbearbeitungspunktes 10, also quer zu einer x-Richtung.

Um den Auftreffpunkt 14 des Bearbeitungslaserstrahls 15 präzise auf der zu bearbeitenden Spur 23, also auf der erfassten Stoßfuge zu führen, ist es erforderlich, die Zeit zu ermitteln, nach der der Auftreffpunkt 14 des Laserstrahls 15 auf die erfasste Lage der Spur eingestellt wird.

Diese Zeit wird als Quotient des Abstandes d durch die aktuelle Vorschub- oder Bearbeitungsgeschwindigkeit berechnet.

Obwohl es grundsätzlich möglich ist, die aktuelle Vorschubgeschwindigkeit zu messen, ist es zweckmäßig, wenn eine Berechnungseinheit 27, der neben der aus dem Kamerabild ermittelten Lage y(Pn) auch der Abstand d zwischen Auftreffpunkt 14 des Laserstrahls 15 und Lichtlinie 16 zugeführt wird, aus einer Steuerungseinheit der Maschinensteuerung die aktuelle Bearbeitungsgeschwindigkeit ausliest.

Der von der Bildverarbeitungseinheit 26 ermittelte Abstand d zwischen Lichtlinie 16 und Auftreffpunkt 14 des Laserstrahls 15 wird nicht nur als Parameter zur Berechnung des zeitlichen Versatzes zwischen Erfassen der Lage y(Pn) der Spur und der Nachführung des Auftreffpunktes 14 des Laserstrahls 15 genutzt, sondern auch als Parameter zur Einstellung der Höhe des Laserstrahlfokus relativ zur Oberfläche 13 des Werkstücks 20. Aus dem Vergleich des Ist-Abstands mit einem Soll-Abstand lässt sich mittels Triangulation die Lage des Laserstrahlfokus relativ zur Werkstückoberfläche 13 in z-Richtung, also senkrecht zur Werkstückoberfläche 13, ermitteln. Ist der Ist-Abstand d kleiner als der Soll-Abstand, so befindet sich der Arbeitslaserfokus, der dem Laserbearbeitungspunkt, also dem TCP, entspricht, in einem Abstand über der Werkstückoberfläche 13. Umgekehrt liegt, wenn der Ist-Abstand größer als der Soll-Abstand ist, der Laserstrahlfokus unterhalb der Werkstückoberfläche 13.

Um den Laserstrahlfokus in die gewünschte Lage senkrecht zur Werkstückoberfläche zu bewegen, ist es einerseits möglich, ein entsprechendes Stellsignal an die Maschinensteuerung auszugeben, die den gesamten Laserbearbeitungskopf 10 entsprechend dem Doppelpfeil 25 verstellt, wie durch die gestrichelte Linie 25' angedeutet ist. Der Laserstrahlfokus lässt sich aber auch durch Verschieben oder Verändern der Strahlformungsoptik 11 auf ein entsprechendes Stellsignal hin verstellen, wie durch die gestrichelte Linie 24' angedeutet ist.

Um die Qualität einer Laserbearbeitung, insbesondere eines Schweißprozesses, sicherzustellen, ist eine präzise Nahtverfolgung erforderlich. Hierzu wird erfindungsgemäß die Ist-Vorschubgeschwindigkeit während des Bearbeitungsprozesses, also insbesondere während des Schweißprozesses aus der Maschinensteuerung ausgelesen und von der Software einer Berechnungseinheit 27 als aktueller Parameter für die Berechnung des Zeitpunktes für die Nachführung des Laserauftreffpunktes 14 genutzt. Aus der von der Bildverarbeitungseinheit 26 ebenfalls ermittelten Abstandsänderung der Lichtlinie 16 zum Laserauftreffpunkt 14, also aus der Abstandsänderung des Lichtschnitts zum TCP wird die Verschiebung des Laserstrahlfokus in Strahlrichtung (z-Richtung) auf Basis der Triangulation berechnet. Dieser Wert wird dann dazu genutzt, um die Fokussier- oder die Kollimationslinse so zu verschieben, dass der Laserstrahlfokus wieder auf der Werkstückoberfläche 13 liegt.

Um eine präzise Nahtverfolgung zu erhalten, werden also erfindungsgemäß sowohl die zeitlich veränderliche Vorschubgeschwindigkeit des Laserbearbeitungskopfes relativ zum Werkstück, als auch die Veränderungen des Abstands einer Lichtschnittlinie vom Bearbeitungsmittelpunkt, also vom Laserauftreffpunkt berücksichtigt. Beide Werte werden bei der Fokusnachführung zur lateralen Nahtverfolgung der Bearbeitungslinie rechnerisch berücksichtigt.

## Patentansprüche

1. Verfahren zum Führen eines Bearbeitungskopfes, insbesondere Laserbearbeitungskopfes (10) entlang einer zu bearbeitenden Spur (23), bei dem
- eine Lichtlinie (16) in Bearbeitungsrichtung in einem Abstand (d) vor dem Bearbeitungspunkt (14) quer zu der zu bearbeitenden Spur (23) auf diese projiziert wird,
- aus fortlaufend während der Bearbeitung aufgenommenen Bildern der Lichtlinie (16) die Lage y(Pn) der Spur (23) vor dem Bearbeitungspunkt (14) ermittelt wird, und
- der Bearbeitungspunkt (14) auf die Spur (23) ausgerichtet wird, sobald der Bearbeitungspunkt (14) den jeweiligen Punkt (Pn) auf der Spur (23) erreicht, für den die Lage y(Pn) der Spur (23) ermittelt wurde,
wobei die Bearbeitungsgeschwindigkeit, mit der der Bearbeitungspunkt (14) entlang der zu bearbeitenden Spur (23) geführt wird, erfasst wird,
**dadurch gekennzeichnet, dass** die aktuelle Bearbeitungsgeschwindigkeit aus einer die Bewegung des Bearbeitungskopfes (10) steuernden Steuerungseinheit ausgelesen und als Parameter bei der Berechnung des Zeitpunkts für die Nachführung des Bearbeitungspunktes (14) genutzt wird, und
dass aus dem Abstand (d) der Lichtlinie (16) vom Bearbeitungspunkt (14) und der aktuellen Bearbeitungsgeschwindigkeit der Zeitpunkt bestimmt wird, zu dem der Bearbeitungspunkt den jeweiligen Punkt (Pn) der Spur (23) erreicht.

2. Verfahren nach Anspruch 1, **dadurch gekennzeichnet, dass** der Ist-Abstand (d) zwischen der Lichtlinie (16) auf dem Werkstück und dem Bearbeitungspunkt (14) in Bearbeitungsrichtung erfasst und als Parameter für die Berechnung des Zeitpunkts für die Nachführung des Bearbeitungspunktes (14) genutzt wird.

3. Verfahren nach Anspruch 2, **dadurch gekennzeichnet, dass** der erfasste Ist-Abstand (d) als Parameter einer Regelung des Abstandes des Fokus eines Bearbeitungslaserstrahls (15) von einer Werkstückoberfläche (13) genutzt wird.

4. Verfahren nach Anspruch 3, **dadurch gekennzeichnet, dass** der erfasste Ist-Abstand (d) als Parameter bei einer Regelung eines Abstandes des Bearbeitungskopfes (10) von der Werkstückoberfläche (13) genutzt wird.

5. Verfahren nach Anspruch 3, **dadurch gekennzeichnet, dass** der erfasste Ist-Abstand (d) als Parameter zum Verschieben einer Strahlformungsoptik (11) zum Fokussieren des Bearbeitungslaserstrahls (15) auf die Werkstückoberfläche (13) genutzt wird.

## Claims

1. A method for guiding a machining head, in particular a laser machining head (10), along a track (23) to be machined, wherein
- a line of light (16) is projected onto said machining track (23), transversely thereto, in machining direction at a distance (d) in front of said machining point (14),
- the location y(Pn) of said track (23) in front of said machining point (14) is determined from images of said line of light (16) recorded continuously during machining, and
- said machining point (14) is aligned with said track (23) as soon as said machining point (14) reaches said respective point (Pn) on said track (23) for which the location y(Pn) of said track (23) was determined,
wherein the machining speed at which said machining point (14) is guided along said track (23) to be machined is detected,
**characterized in that** the current machining speed is read from a control unit controlling the movement of said machining head (10) and is used as parameters for calculating the time for the tracking of said machining point (14), and
the time at which the machining point reaches the respective point (Pn) of said track (23) is determined from the distance (d) of said line of light (16) from said machining point (14) and the current machining speed.

2. The method according to claim 1, **characterized in that** the actual distance (d) between said line of light (16) on the workpiece and said machining point (14) in the machining direction is detected and is used as a parameter for calculating the time for the tracking of said machining point (14).

3. The method according to claim 2, **characterized in that** the detected actual distance (d) is used as a parameter for controlling the distance between the focus of a machining laser beam (15) and a workpiece surface (13).

4. The method according to claim 3, **characterized in that** the detected actual distance (d) is used as a parameter for controlling a distance between said machining head (10) and said workpiece surface (13).

5. The method according to claim 3, **characterized in that** the detected actual distance (d) is used as a parameter for displacing a beam-shaping optics (11) for focusing said machining laser beam (15) on said workpiece surface (13).

## Revendications

1. Procédé pour guider une tête d'usinage, en particulier une tête d'usinage au laser (10), le long d'une trace à usiner (23), comportant les étapes consistant à :
- projeter sur la trace à usiner (23) une ligne lumineuse (16) dans une direction d'usinage, à une certaine distance (d) avant le point d'usinage (14) et transversalement à cette trace,
- déterminer, à partir d'images de la ligne lumineuse (16) enregistrées en continu pendant l'usinage, la position y(Pn) de la trace (23) avant le point d'usinage (14), et
- aligner le point d'usinage (14) sur la trace (23) dès que le point d'usinage (14) atteint le point (Pn) respectif sur la trace (23) pour lequel la position y(Pn) de la trace (23) a été déterminée,
dans lequel la vitesse d'usinage à laquelle le point d'usinage (14) est guidé le long de la trace (23) à usiner, est détectée,
**caractérisé en ce que** la vitesse d'usinage actuelle est lue à partir d'une unité de commande pilotant le mouvement de la tête d'usinage (10) et est utilisée comme paramètre pour calculer l'instant du suivi du point d'usinage (14), et
l'instant auquel le point d'usinage atteint le point (Pn) respectif de la trace (23) est déterminé à partir de la distance (d) entre la ligne lumineuse (16) et le point d'usinage (14) et à partir de la vitesse d'usinage actuelle.

2. Procédé selon la revendication 1, **caractérisé en ce que** la distance réelle (d) entre la ligne lumineuse (16) sur la pièce et le point d'usinage (14) dans la direction d'usinage est détectée et utilisée comme paramètre pour calculer l'instant du suivi du point d'usinage (14).

3. Procédé selon la revendication 2, **caractérisé en ce que** la distance réelle (d) détectée est utilisée comme paramètre pour réguler la distance du foyer d'un faisceau laser d'usinage (15) par rapport à une surface de pièce (13).

4. Procédé selon la revendication 3, **caractérisé en ce que** la distance réelle (d) détectée est utilisée comme paramètre pour réguler une distance de la tête d'usinage (10) par rapport à la surface de pièce (13).

5. Procédé selon la revendication 3, **caractérisé en ce que** la distance réelle (d) détectée est utilisée comme paramètre pour décaler une optique de mise en forme de faisceau (11) afin de focaliser le faisceau laser d'usinage (15) sur la surface de pièce (13).
